# EUROPEAN PATENT SPECIFICATION

(11) **EP 3 987 088 B1**
(45) Date of publication and mention of the grant of the patent: **26.07.2023**
(21) Application number: 20736252.6
(22) Date of filing: 15.06.2020
(51) Int. Cl.: D01D 1/02, D01F 2/00, D01F 13/00

(54) **PREPARATION METHOD AND DEVICE FOR PRODUCING RECYCLED FIBER SPINNING SOLUTION USING SOLVENT METHOD**
VORBEREITUNGSMETHODE UND VORRICHTUNG ZUR HERSTELLUNG VON RECYCLING-FASERSPINNLÖSUNGEN UNTER VERWENDUNG DER LÖSUNGSMITTELMETHODE
PROCÉDÉ DE PRÉPARATION ET DISPOSITIF POUR PRODUIRE UNE SOLUTION DE FILAGE EN FIBRE RECYCLÉE EN UTILISANT UN PROCÉDÉ SOLVANT

(30) Priority: 20.06.2019 DE 102019116736
(43) Date of publication of application: 27.04.2022
(73) Proprietor: LIST Technology AG, 4422 Arisdorf (CH)
(72) Inventor: KUNKEL, Roland, 60316 Frankfurt a. M. (DE); WITTE, Daniel, 79639 Grenzach-Whylen (DE); KÖNIG, Sven, 4148 Pfeffingen (CH); STEINER, Manuel, 4054 Basel (CH); WANG, Weilie, 110013 Shenyang (CN)
(74) Representative: Patentanwälte und Rechtsanwalt Weiß, Arat & Partner mbB
(86) International application number: PCT/EP2020/066452
(87) International publication number: WO 2020/254232

(56) References cited:
- CN-A- 101 280 476
- CN-A- 105 536 277
- TW-A- 201 240 721
- US-A1- 2015 114 256

## Description

### Technical field

The present invention relates to the field of textile technology, and in particular to a method and a device for preparing a regenerated cellulose fiber spinning dope using a solvent method.

### Background technique

At present, the solvent method for producing regenerated cellulose fiber solution is mainly prepared by mixing NMMO solvent with cellulose. The preparation process of lyocell fiber solution is now illustrated as an example. The preparation of lyocell fiber solution is a high-viscosity spinnable dope which is dissolved by direct physical modification of cellulose using a non-toxic solvent NMMO (N-methylmorpholine-M-oxide). In order to achieve this process, there are currently three production methods/devices on the market.
1. The most widely used device is to use a wiped film evaporator (also known as a thin film evaporator) to evaporate water in a suspension containing cellulose, water and NMMO with a small amount of auxiliary agent under vacuum conditions, when the concentration of NMMO reaches about 87%, cellulose glue is formed. The entire process is done in a wiped film evaporator. The whole set of equipment is separately equipped with a condensing system. By measuring the amount of condensed water, the state of the dope is estimated and used as the basis for adjusting the corresponding temperature or rotor revolution or vacuum. The dope is then subjected to subsequent processing such as pipe transportation and filtration to a spinning machine for spinning. The advantage of the wiped film evaporator is that it has good heat transfer performance, but the disadvantage is that the power consumption of the device is large, the time for material retention is short, and the homogenization of the dope is not well controlled. Large processing equipment cannot be infinitely magnified due to limitations in the mechanical processing of equipment. In addition, after the equipment is enlarged, the load and size are increased, and the requirements for the factory building are also higher, resulting in excessive investment cost and low cost performance. The largest single unit capacity of this equipment is currently between 15,000 tons/year and 25,000 tons/year.
2. Another production device used on a small scale is to hydrate the suspension containing cellulose, water and NMMO with a small amount of auxiliary agent under a vacuum condition through a horizontally disposed kneading reactor. During evaporation, when the concentration of NMMO reaches about 87%, cellulose glue is formed. The entire process is completed in a wiped film evaporator and the entire unit is individually equipped with a condensing system. The dope is then subjected to subsequent processing such as pipe transportation and filtration to a spinning machine for spinning. The advantage of the kneading reactor is that the material residence time is longer and the mixing effect is good. The disadvantage is that the equipment is expensive and the evaporation efficiency is low. The largest single capacity of this equipment is currently not more than 5,000 tons / year. Not suitable for the current needs of large-scale production.
3. There is also a production device which utilizes the respective advantages of the above two devices in combination, such as the invention patent entitled "Method for Manufacturing Molded Parts" disclosed in Patent Application Publication No. CN104246029A and WO 2013 156 489 A1, namely a wiped film evaporator and a kneading reactor used in connection. The material in the wiped film evaporator utilizes its good heat transfer performance to evaporate as much water as possible and below the amount of water evaporation required for the glue forming solution, and then the suspension is evaporated in a small amount in a kneading reactor where remaining particles are dissolved yielding the spinning solution. The desired state and the use of its excellent mixing properties allow the materials to be uniformly mixed into a homogenized dope. Although this device is theoretically more advanced than the previous two devices and the capacity of a single set will be improved, it is still limited by the processing size of the wiped film evaporator, so it cannot meet the requirements of larger capacity. The maximum capacity of a single unit does not exceed 30,000 tons per year. The whole set of equipment is separately equipped with a condensing system. The evaporation effect and state of each equipment are not determined by the amount of condensed water. Instead, the concentration of the forming solution and/or diluent is controlled by the optical index (refractive index), and the ideal optical index is proposed. The index is between 1.45-1.52, but this control method only applies to the completion of the entire dope forming step with the single device mentioned in the above 1 and 2.

### Object of the present invention

The object of the present invention is to provide an improved system and preparation method of a regenerated cellulose fiber spinning dope by a solvent method.

### Summary of the invention

In view of the above-mentioned background technique, several types of devices, the single set of capabilities did not meet the annual output of 30,000 tons, and the matching of multiple sets of preparation of glue devices will inevitably be due to process control and processing of the same type of equipment. There is a difference in the quality of the dope, which affects the uniformity of the quality of the final product. Therefore, it is necessary to develop a combined device with greater capacity, so that the capacity of each production line can reach 60,000 tons per year (330 days of calculation), and even higher, achieving higher efficiency and ensuring uniform product quality, while having Operational. In addition, another outstanding advantage of this device is that it can adjust the space according to the user's needs, such as opening only one wiped film evaporator, and the others are not open. It also facilitates separate maintenance and overhaul of the equipment.

The present invention provides a system and a preparation method of a regenerated cellulose fiber spinning dope by a solvent method based on the understanding of the advantages and disadvantages of the above method. It changes the operating process and equipment configuration to achieve a significant increase in single-line capacity while ensuring a better homogenized solvent-based spinning solution. For example, the capacity of each production line can reach 40,000 tons per year, or 60,000 tons per year (330 days).

To achieve this, a single set of devices can be configured in combination with two or more (hereinafter collectively referred to as multiple) wiped film evaporators and a single kneading reactor depending on the capacity requirements. The size of the equipment is optimized according to the capacity. Each wiped film evaporator and the kneading reactor are preferably equipped with a separate condensing system. By metering, the temperature of the jacketed heat medium of each single device can be adjusted by comparing the actual amount of evaporated water with the theoretical calculated value. Adjusting the rotor rotation number or vacuum adjustment or a combination of both can be used to control the amount of evaporation water, that is, the control of the degree of dissolution of the dope.

Taking NMMO solvent as an example: The cellulose suspension containing NMMO is separately injected into a plurality of vertical wiped film evaporators for pre-evaporation, and then the suspension is transported to a horizontal kneading reactor for evaporation and mixing. A homogenized dope is formed and discharged. Based on three known devices, the dissolution process of NMMO-containing cellulose pulp in NMMO was analyzed from a process technology perspective.

It can be determined that the dissolution process can be basically divided into three steps. The first step is to evaporate water from the cellulose-solvent pulp until the dissolution starting point of the cellulose. This starting point corresponds to reaching the dissolution window, corresponding to about 2.5 hydrated NMMO. This step requires a large amount of thermal energy to evaporate the water, but since the cellulose has not been dissolved without any additional residence time, and the viscosity of the pulp is low.

After the dissolution window is reached, the main dissolution of the viscosity is significantly increased in the second step. This step evaporates relatively little water and evaporates to about 1.5 hydrated NMMO.

The third step is determined by the degree of homogenization of the spinning dope and by evaporation of less water to 0.8 to 1.0 hydrate depending on the concentration of cellulose.

An advantage of the present invention is that the device utilizes a good thermal conductivity of the wiped film evaporator to facilitate evaporation of a large amount of moisture in the case where the viscosity is low in the first step and the residence time is short. Due to the low viscosity, the power consumption of the motor is also significantly reduced. Kneading reactor are suitable for the second and third steps due to their excellent homogenization performance and long residence time, as well as the ability to handle high viscosity materials and less water evaporation requirements.

Another major advantage of the method and system of the present invention is the high throughput / performance rate, even when compared to known systems containing exactly one wiped film evaporator upstream of exactly one kneading reactor.

### DRAWINGS

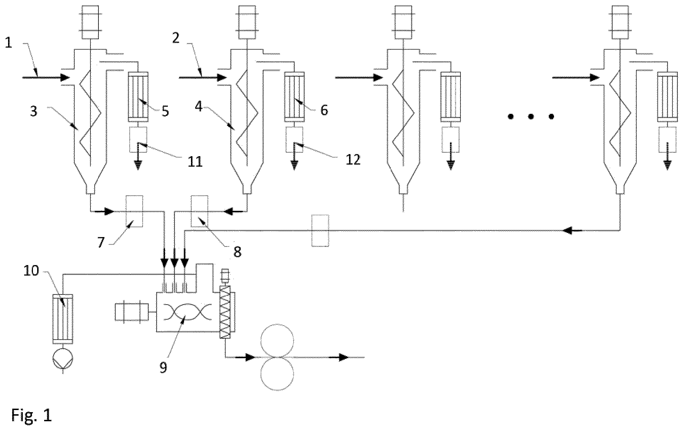

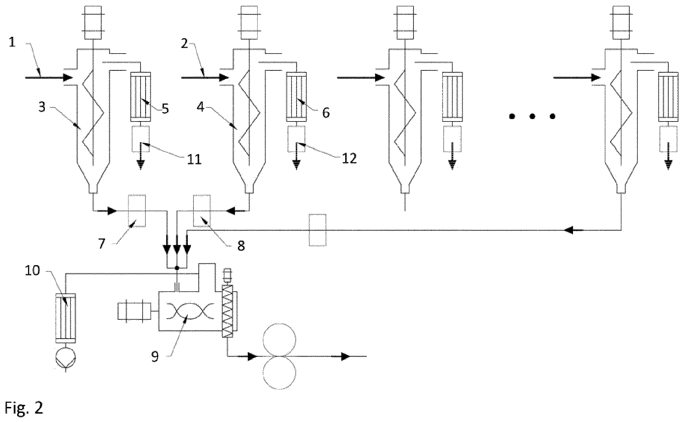

In the figures 1 and 2, input lines 1, 2, condensers 5, 6 and wiped film evaporators 3, 4 are shown. Reference number 7 refers to either auger or straight transition, reference number 8 refers tor pump or auger or straight transition, reference number 9 refers to kneading reactor, reference number 10 refers to condensation.

The following embodiments illustrate the features and advantages of the present invention by taking two wiped film evaporator corresponding to a kneading reactor as an example; the drawings of the present invention are not unique, and multiple wiped film evaporations can be performed according to customer and capacity requirements. The device corresponds to a kneading reactor for different combinations.

The possibility of using more than two wiped film evaporators is indicated in the figures by showing the two wiped film evaporators without reference numbers on the right side of each figure.

### DETAILED DESCRIPTION OF THE PREFERRED EMBODIMENTS (Description of the drawings only as an example)

Example 1 referring to Figure 1 differs from example 2 / Figure 2 only with respect to the transitions 7, 8 between the wiped film evaporators 3, 4 and the kneading reactor 9. In contrast to example 2, the transitions 7, 8 of example 1 are not combined before entering the kneading reactor 9.

Example 2 / Figure 2: The cellulose mixture previously mixed with NMMO and the auxiliary agent was metered into the wiped film evaporators 3 and 4 separately through the input lines 1 and 2, and it was also possible to carry out separately.

The connecting sections can be set separately (Figure 1) or concentrated first to one or more main pipes (Figure 2) before being connected to the kneading reactor 9.

In the wiped film evaporator 3, 4, the injected mixture material is subjected to evaporation and concentration of water. The concentrated material is transferred from the wiped film evaporators 3 and 4 (which can be carried out simultaneously or separately) into the same corresponding kneading reactor 9.

In the wiped film evaporators 3 and 4, in the case where the jacket is heated, the mixture material is formed into a film from the wiped film evaporator and the material is evaporated under vacuum, and the cellulose is evaporated under vacuum. No dissolution was achieved during this process. In the kneading reactor 9, in the case of jacket heating, the material is thoroughly mixed with the solvent (NMMO) and partially evaporated to achieve cellulose dissolution, thereby forming a highly viscous spinnable dope. The spinning dope is then conveyed through a pipe and a pump body to a spinning machine through a discharge device for spinning.

In order to further increase the productivity, it is also possible to slightly increase the cellulose concentration in the dope, and then dilute it to a suitable spinnable cellulose spinning solution. Dilution is done through the input line in the discharge unit. It may also be diluted upstream of the kneading reactor upstream of the discharge device or dispersed at multiple locations simultaneously.

The dope is conveyed downstream of the discharge device by means of one or more pumps to the downstream processing and spinning device.

The secondary vapor generated in the wiped film evaporators 3 and 4 and the kneading reactor 9 is condensed by a correspondingly connected condenser.

## Claims

1. A method for preparing a regenerated cellulose fiber spinning dope by a solvent method, wherein an aqueous mixture of cellulose and a solvent and an auxiliary agent is prepared into a spinnable cellulose spinning dope, **characterized in that** the material mixture is first injected into two or more vertical wiped film evaporators (3, 4), then injected into a horizontal, and preferably cylindrical, kneading reactor (9) connected thereto and evaporated and mixed under vacuum, wherein each of the wiped film evaporators (3, 4) is directly connected by a connecting section to the kneading reactor (9).

2. The method according to claim 1, wherein the connecting section adopts a pump or a screw pushing material or a gravity blanking method for material conveying through the pipeline or adopts a direct manner

3. The method of claim 1 wherein each of the individual vertical wiped film evaporators (3, 4) and the preferably cylindrical kneading reactor (9) unit are each provided with a separate condensing system

4. The method according to claim 1, wherein the vacuum system of each of the individual vertical wiped film evaporators (3, 4) and the preferably cylindrical kneading reactor(9) can be separately configured or shared or the wiped film evaporator (3, 4) shares a set of vacuum systems.

5. The method of claim 1 wherein each individual vertical wiped film evaporator (3, 4) and preferably cylindrical kneading reactor (9) unit operates at different vacuum pressures or at the same vacuum pressure.

6. Process according to claims 1-5, **characterized in that** the solvent is NMMO or other solvent which can dissolve cellulose.

7. The method of claim 1 wherein the mixture evaporates moisture in the vertical wiped film evaporators (3, 4) and increases the solvent concentration but is less than the concentration required for cellulose dissolution.

8. Process according to claim 7, **characterized in that** the NMMO is concentrated to a level above the monohydrate, using a solvent dominated by NMMO, preferably, the ratio of NMMO to water and NMMO is lower than 86.7%.

9. The method according to claim 1, wherein in the kneading reactor (9), the material sent from the wiped film evaporators (3, 4) to the kneading reactor (9) increases the solvent dissolution concentration by evaporating moisture to The level of dissolution with cellulose is homogenized to form a spinnable solution.

10. The method according to claim 9, wherein the NMMO is concentrated to a level of monohydrate, such as a solvent based on NMMO, preferably, the ratio of NMMO to water and NMMO is not less than 86.7%.

11. The method according to claim 1, wherein the wiped film evaporators (3, 4) jacket steam temperature is between 100-180°C, preferably 100-150°C, and the jacket hot water temperature is 80- 105°C and the kneading reactor (9) jacketed heat medium operates between 90-120°C, preferably 100-110°C.

12. The method according to claim 1, wherein the wiped film evaporators (3, 4) and the kneading reactor (9) are operated under a vacuum of 40-100 mbar, preferably 45-55 mbar under vacuum operation condition.

13. The method according to claim 12, wherein if the wiped film evaporators (3, 4) and the kneading reactor (9) operate at different degrees of vacuum, preferably the vacuum pressure of the kneading reactor (9) is less than the vacuum of the wiped film evaporators (3, 4) pressure.

14. A method according to claim 1 or claim 3 wherein the evaporation of the material under vacuum requires condensation of the evaporated water vapor through a condenser, wherein the calculated amount of condensed water and the actual amount of condensed water are used to adjust the jacket heat medium temperature or the rotor speed or the degree of vacuum or a combination to control the extent of moisture evaporation in the spinning dope, wherein, if the actual amount of condensation is less than the amount of condensation required for calculation, it can be adjusted by increasing the temperature of the heat medium or increasing the number of revolutions of the rotor or lowering the vacuum pressure or using it in combination.

15. System comprising at least two vertical wiped film evaporators (3, 4) connected with a single horizontal, preferably cylindrical, kneading reactor (9), wherein each of the wiped film evaporators (3, 4) is directly connected by a connecting section to the kneading reactor (9).

## Patentansprüche

1. Verfahren zur Herstellung einer regenerierten Zellulosefaser-Spinnlösung durch ein Lösungsmittelverfahren, bei dem ein wässriges Gemisch aus Zellulose und einem Lösungsmittel und einem Hilfsstoff zu einer spinnbaren Zellulose-Spinnlösung verarbeitet wird, **dadurch gekennzeichnet, dass** das Materialgemisch zunächst in zwei oder mehrere vertikale Wischfilmverdampfer (3, 4) eingetragen wird, dann in einen mit den Wischfilmverdampfern verbundenen horizontalen, vorzugsweise zylindrischen Knetreaktor (9) eingetragen und unter Vakuum verdampft und gemischt wird.

2. Verfahren nach Anspruch 1, bei dem der Verbindungsabschnitt entweder eine Pumpe oder eine Schnecke zum Fördern des Materials durch die Rohrleitung verwendet, oder wobei der Verbindungsabschnitt ein Schwerkraft-Verfahren für die Materialförderung verwendet oder wobei der Verbindungsabschnitt eine unmittelbare Verbindung bereitstellt.

3. Verfahren nach Anspruch 1, wobei jeder der einzelnen vertikalen Wischfilmverdampfer (3, 4) und die vorzugsweise zylindrische Knetreaktoreinheit (9) jeweils mit einem separaten Kondensationssystem versehen sind.

4. Verfahren nach Anspruch 1, wobei das Vakuumsystem jedes der einzelnen vertikalen Wischfilmverdampfer (3, 4) und des vorzugsweise zylindrischen Knetreaktors (9) getrennt oder gemeinsam konfiguriert werden können oder der Wischfilmverdampfer (3, 4) einen Satz von Vakuumsystemen gemeinsam nutzt.

5. Verfahren nach Anspruch 1, wobei jeder einzelne vertikale Wischfilmverdampfer (3, 4) und vorzugsweise der zylindrische Knetreaktor (9) bei unterschiedlichen Vakuumdrücken oder bei demselben Vakuumdruck arbeitet.

6. Verfahren nach den Ansprüchen 1-5, **dadurch gekennzeichnet, dass** das Lösungsmittel NMMO oder ein anderes Lösungsmittel ist, das Zellulose auflösen kann.

7. Verfahren nach Anspruch 1, bei dem das Gemisch in den vertikalen Wischfilmverdampfern (3, 4) Feuchtigkeit verdampft und die Lösungsmittelkonzentration erhöht, welche jedoch geringer ist als die für die Zelluloseauflösung erforderliche Konzentration.

8. Verfahren nach Anspruch 7, **dadurch gekennzeichnet, dass** das NMMO auf ein Niveau oberhalb des Monohydrats konzentriert wird, wobei ein von NMMO dominiertes Lösungsmittel verwendet wird, vorzugsweise ist das Verhältnis von NMMO zu Wasser und NMMO geringer als 86,7%.

9. Verfahren nach Anspruch 1, wobei in dem Knetreaktor (9) das von den Wischfilmverdampfern (3, 4) zum Knetreaktor (9) geschickte Material die zur Auflösung benötigte Lösungsmittelkonzentration durch Verdampfen von Feuchtigkeit auf den Grad der Auflösung mit Zellulose erhöht, um eine verspinnbare Spinnlösung zu bilden.

10. Verfahren nach Anspruch 9, bei dem das NMMO auf ein Niveau des Monohydrats, wie z.B. ein auf NMMO basierendes Lösungsmittel, konzentriert wird, wobei vorzugsweise das Verhältnis von NMMO zu Wasser und NMMO nicht weniger als 86,7% beträgt.

11. Verfahren nach Anspruch 1, wobei die Dampftemperatur im Mantel des der Wischfilmverdampfers (3, 4) zwischen 100-180°C, vorzugsweise 100-150°C, und die Heisswassertemperatur des Mantels 80- 105°C beträgt und das Mantelwärmemedium des Knetreaktors (9) zwischen 90-120°C, vorzugsweise 100-110°C, arbeitet.

12. Verfahren nach Anspruch 1, wobei die Wischfilmverdampfer (3, 4) und der Knetreaktor (9) unter einem Vakuum von 40-100 mbar, vorzugsweise 45-55 mbar unter Vakuumbetriebsbedingungen betrieben werden.

13. Verfahren nach Anspruch 12, wobei, wenn die Wischfilmverdampfer (3, 4) und der Knetreaktor (9) bei unterschiedlichen Vakuumqualitäten arbeiten, vorzugsweise ist der Vakuumdruck des Knetreaktors (9) geringer als der Druck der Wischfilmverdampfer (3, 4).

14. Verfahren nach Anspruch 1 oder Anspruch 3, wobei die Verdampfung des Materials unter Vakuum die Kondensation des verdampften Wasserdampfes durch einen Kondensator erfordert, wobei die berechnete Menge an kondensiertem Wasser und die tatsächliche Menge an kondensiertem Wasser verwendet werden, um die Temperatur des Mantelwärmemediums oder die Rotorgeschwindigkeit oder die Qualität des Vakuums oder eine Kombination zur Steuerung des Ausmasses der Feuchtigkeitsverdampfung in der Spinnmasse einzustellen, wobei, wenn die tatsächliche Kondensationsmenge kleiner als die für die Berechnung erforderliche Kondensationsmenge ist, diese durch Erhöhung der Temperatur des Wärmemediums oder Erhöhung der Drehzahl des Rotors oder Senkung des Vakuumdrucks oder durch Verwendung durch eine Kombination der vorgenannten Massnahmen eingestellt werden kann.

15. System mit mindestens zwei vertikalen Wischfilmverdampfern (3, 4), die mit einem einzigen horizontalen, vorzugsweise zylindrischen, Knetreaktor (9) verbunden sind.

## Revendications

1. Procédé permettant de préparer une solution de filage de fibres de cellulose régénérées, par un procédé au solvant, dans lequel un mélange aqueux de cellulose et d'un solvant et d'un agent auxiliaire est préparé en une solution de filage de cellulose pouvant être filée, **caractérisé en ce que** le mélange de matériaux est d'abord injecté dans deux évaporateurs à film raclé verticaux ou plus (3,4), puis injecté dans un réacteur de malaxage horizontal, et de préférence cylindrique (9) raccordé à ceux-ci et évaporé et mélangé sous vide, dans lequel chacun des évaporateurs à film raclé (3, 4) est directement raccordé par une section de raccordement au réacteur de malaxage (9).

2. Procédé selon la revendication 1, dans lequel la section de raccordement adopte une pompe ou une vis poussant le matériau ou un procédé d'obturation par gravité pour le transport de matériau à travers la conduite ou adopte une manière directe

3. Procédé selon la revendication 1 dans lequel chacun des évaporateurs à film raclé verticaux individuels (3, 4) et l'unité de réacteur de malaxage de préférence cylindrique (9) sont pourvus chacun d'un système de condensation séparé

4. Procédé selon la revendication 1, dans lequel le système de vide de chacun des évaporateurs à film raclé verticaux individuels (3, 4) et le réacteur de malaxage de préférence cylindrique (9) peuvent être configurés séparément ou partagés ou l'évaporateur à film raclé (3, 4) partage un ensemble de systèmes de vide.

5. Procédé selon la revendication 1 dans lequel chaque évaporateur à film raclé vertical individuel (3, 4) et unité de réacteur de malaxage de préférence cylindrique (9) fonctionne à différentes pressions de vide ou à la même pression de vide.

6. Processus selon les revendications 1 à 5, **caractérisé en ce que** le solvant est du NMMO ou un autre solvant qui peut dissoudre de la cellulose.

7. Procédé selon la revendication 1 dans lequel le mélange évapore l'humidité dans les évaporateurs à film raclé verticaux (3, 4) et augmente la concentration en solvant mais est inférieur à la concentration requise pour une dissolution de cellulose.

8. Processus selon la revendication 7, **caractérisé en ce que** le NMMO est concentré jusqu'à un niveau au-dessus du monohydrate, à l'aide d'un solvant dominé par NMMO, de préférence, le rapport du NMMO à l'eau et au NMMO est inférieur à 86,7 %.

9. Procédé selon la revendication 1, dans lequel, dans le réacteur de malaxage (9), le matériau envoyé à partir des évaporateurs à film raclé (3, 4) vers le réacteur de malaxage (9) augmente la concentration de dissolution de solvant en évaporant l'humidité jusqu'au degré de dissolution avec la cellulose, pour former une solution pouvant être filée.

10. Procédé selon la revendication 9, dans lequel le NMMO est concentré jusqu'à un niveau de monohydrate, tel qu'un solvant à base de NMMO, de préférence, le rapport du NMMO à l'eau et au NMMO n'est pas inférieur à 86,7 %.

11. Procédé selon la revendication 1, dans lequel la température de vapeur d'enveloppe des évaporateurs à film raclé (3, 4) est comprise entre 100 et 180 °C, de préférence 100 et 150 °C, et la température d'eau chaude d'enveloppe va de 80 à 105 °C et le milieu thermique d'enveloppe du réacteur de malaxage (9) fonctionne entre 90 et 120 °C, de préférence 100 et 110 °C.

12. Procédé selon la revendication 1, dans lequel les évaporateurs à film raclé (3, 4) et le réacteur de malaxage (9) sont mis en fonctionnement sous un vide de 40 à 100 mbar, de préférence 45 à 55 mbar dans une condition de fonctionnement sous vide.

13. Procédé selon la revendication 12, dans lequel si les évaporateurs à film raclé (3, 4) et le réacteur de malaxage (9) fonctionnent à différents degrés de vide, de préférence la pression de vide du réacteur de malaxage (9) est inférieure à la pression de vide des évaporateurs à film raclé (3, 4).

14. Procédé selon la revendication 1 ou la revendication 3 dans lequel l'évaporation du matériau sous vide exige une condensation de la vapeur d'eau évaporée à travers un condenseur, dans lequel la quantité calculée d'eau condensée et la quantité réelle d'eau condensée sont utilisées pour ajuster la température de milieu thermique d'enveloppe ou la vitesse de rotor ou le degré de vide ou une combinaison pour commander l'étendue d'évaporation d'humidité dans la solution de filage, dans lequel, si la quantité réelle de condensation est inférieure à la quantité de condensation requise pour le calcul, elle peut être ajustée en augmentant la température du milieu thermique ou en augmentant le nombre de révolutions du rotor ou en abaissant la pression de vide ou en l'utilisant en combinaison.

15. Système comprenant au moins deux évaporateurs à film raclé verticaux (3, 4) raccordés à un unique réacteur de malaxage horizontal, de préférence cylindrique (9), dans lequel chacun des évaporateurs à film raclé (3, 4) est directement raccordé par une section de raccordement au réacteur de malaxage (9).
